(19) Europäisches Patentamt / European Patent Office / Office européen des brevets

(11) EP 3 246 460 B1

(12) EUROPEAN PATENT SPECIFICATION

(45) Date of publication and mention of the grant of the patent:
**26.08.2020 Bulletin 2020/35**

(21) Application number: **16737423.0**

(22) Date of filing: **14.01.2016**

(51) Int Cl.:
***D06M 15/227*** (2006.01) ***C08K 3/04*** (2006.01)
***C08K 5/17*** (2006.01) ***C08L 23/26*** (2006.01)
***D06M 13/328*** (2006.01) ***D06M 101/40*** (2006.01)
***C08L 23/10*** (2006.01) ***C08L 23/14*** (2006.01)
***C08J 5/04*** (2006.01) ***C08J 5/06*** (2006.01)

(86) International application number:
**PCT/JP2016/050992**

(87) International publication number:
**WO 2016/114352 (21.07.2016 Gazette 2016/29)**

(54) **REINFORCING FIBER BUNDLE AND CARBON-FIBER-REINFORCED THERMOPLASTIC RESIN MOLDED ARTICLE, AND METHOD FOR MANUFACTURING REINFORCING FIBER BUNDLE**

VERSTÄRKENDES FASERBÜNDEL UND KOHLENSTOFFFASERVERSTÄRKTER THERMOPLASTISCHER HARZFORMARTIKEL UND VERFAHREN ZUR HERSTELLUNG EINES VERSTÄRKENDEN FASERBÜNDELS

FAISCEAU DE FIBRES DE RENFORCEMENT ET ARTICLE MOULÉ DE RÉSINE THERMOPLASTIQUE RENFORCÉ DE FIBRES DE CARBONE, ET PROCÉDÉ DE FABRICATION DE FAISCEAU DE FIBRES DE RENFORCEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2015 JP 2015006559**
**25.09.2015 JP 2015188579**

(43) Date of publication of application:
**22.11.2017 Bulletin 2017/47**

(73) Proprietors:
- **Mitsui Chemicals, Inc.**
  **Minato-ku**
  **Tokyo 105-7122 (JP)**
- **Formosa Plastics Corporation**
  **Taipei (TW)**

(72) Inventors:
- **NAGAI, Naoshi**
  **Sodegaura-shi**
  **Chiba 299-0265 (JP)**
- **ISAKI, Takeharu**
  **Sodegaura-shi**
  **Chiba 299-0265 (JP)**
- **SHIMIZU, Masaki**
  **Sodegaura-shi**
  **Chiba 299-0265 (JP)**
- **ISHIKAWA, Junichi**
  **Sodegaura-shi**
  **Chiba 299-0265 (JP)**
- **KIKUCHI, Kazuaki**
  **Sodegaura-shi**
  **Chiba 299-0265 (JP)**
- **YI, Chuan Chang**
  **Kaohsiung City 814 (TW)**
- **KAI, Cheng Yen**
  **Kaohsiung City 814 (TW)**
- **MIN, Yuan Lin**
  **Kaohsiung City 814 (TW)**

(74) Representative: **J A Kemp LLP**
**14 South Square**
**Gray's Inn**
**London WC1R 5JJ (GB)**

(56) References cited:
**EP-A1- 2 371 897** **EP-A1- 2 476 799**
**WO-A1-2007/037260** **WO-A1-2011/030784**
**WO-A1-2012/017877** **CN-A- 102 828 416**
**JP-A- H06 107 442** **JP-A- 2006 233 346**
**JP-A- 2012 046 850** **JP-A- 2013 032 600**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 246 460 B1

JP-A- 2015 180 785

US-A1- 2012 238 688

## Description

### Technical Field

The present invention relates to a reinforcing fiber bundle used as a reinforcing material of a thermoplastic resin and a carbon fiber reinforced thermoplastic resin molded body using the same, and a method for producing a reinforcing fiber bundle.

### Background Art

A carbon fiber composite material (CFRP: Carbon Fiber Reinforced Plastic) which is obtained by combining a reinforcing fiber with a plastic is practically used in various fields as a light weight structural material or an attempt of practical realization thereof is progressing, since CFRP is remarkably excellent in specific strength and specific modulus. For example, CFRP using a thermosetting resin is adopted officially as a material of an air frame of an airplane. However, its productivity is not so high since it needs a special molding method (autoclave molding method, RTM method). For example, application of CFRP using a thermosetting resin to automobiles is thus limited to luxury cars. Recently, attention is starting to be paid to CFRP using thermoplastic resins, particularly, a polypropylene-based matrix resin which can be molded at high speed by stamping molding and the like and can be easily subjected to material recycle, for progressing application to mass-produced cars.

In general, polyolefins typified by polypropylene (PP) have poor adhesiveness with carbon fiber. For example, in the case of CFRP using a polypropylene-based matrix resin, a method of improving adhesiveness by using an emulsion in which acid modified PP which is graft-modified with maleic anhydride and the like is dispersed in water is disclosed (Patent document 1 and Patent document 2). In this method, however, under conditions such as small amount of a surfactant in the emulsion, a foreign matter ascribable to aggregation of modified PP is generated in an emulsion in a process of preparing a reinforcing fiber bundle and a trouble occurs in a step of continuously imparting an acid modified PP water dispersion (sizing agent) to the fiber surface, in some cases. Furthermore, sufficient adhesiveness cannot be imparted to the fiber surface and the matrix resin because of this foreign matter, in some cases.

In contrast, for example, a method of adding a specific alcohol such as polyvinyl alcohol into an emulsion in which particles of a water-dispersible polymer such as acid modified PP are dispersed (Patent document 3) and a method of adding a polyimine resin into the emulsion (Patent document 4) are suggested, for improving the strength of the interface between the carbon fiber surface and the matrix resin. However, the industry requires further improvement of properties.

Patent documents 5 to 7 describe that ammonia can be used in a method for producing a reinforcing fiber bundle. However, they do not disclose that a large amount (e.g. 196 to 5,000 moles) of the ammonia is used.

### Related Art Documents

### Patent Documents

Patent document 1: JP H6-107442 A

Patent document 2: WO2006/101269

Patent document 3: JP 2013-177705 A

Patent document 4: JP 2012-184377 A

Patent document 5: EP 2 371 897 A1

Patent document 6: WO 2010/074118

Patent document 7: JP 2006-233346

SUMMARY OF INVENTION

Technical Problem

The present invention has been made for solving the problems of the prior art described above. That is, the present invention has an object of providing a reinforcing fiber bundle which improves adhesiveness of a fiber bundle (reinforcing material) to a matrix resin in a carbon fiber reinforced thermoplastic resin molded body and manifests a sufficient reinforcing effect even if the fiber amount is smaller, and a carbon fiber reinforced thermoplastic resin molded body using the same, and a method for producing a reinforcing fiber bundle.

Solution to Problem

The present inventors have intensively studied to solve the above-described problems and resultantly found that it is very effective to allow a specific amine compound (B) to coexist in a modified polyolefin (A1)-containing emulsion used in a treatment for preparing a reinforcing fiber bundle (e.g., sizing treatment), leading to completion of the present invention. That is, the gist of the present invention is as described below.

[1] A reinforcing fiber bundle composed of a carbon fiber bundle treated with an emulsion, wherein the emulsion contains
a modified polyolefin (A1) comprising at least a metal carboxylate bonded to the polymer chain, and
196 to 5,000 moles of an amine compound (B) represented by the following general formula (1), per one mole of the carboxylate group in the modified polyolefin (A1);

$$R\text{-}NH_2 \qquad (1)$$

wherein the formula (1), R is a hydrogen atom or a hydrocarbon group having 1 to 10 carbon atoms.
[2] The reinforcing fiber bundle according to [1], which is obtained by immersing the carbon fiber bundle into the emulsion and then drying the carbon fiber bundle.
[3] The reinforcing fiber bundle according to [1], wherein the mass ratio of the modified polyolefin (A1) is 0.001 to 10% by mass in the emulsion.
[4] The reinforcing fiber bundle according to [1], wherein the emulsion also contains an unmodified polyolefin (A2), in addition to the modified polyolefin (A1).
[5] The reinforcing fiber bundle according to [1], wherein the adhesion amount of the modified polyolefin (A1) to the reinforcing fiber bundle, or the total adhesion amount of the modified polyolefin (A1) and the unmodified polyolefin (A2) to the reinforcing fiber bundle if it contains the unmodified polyolefin (A2), is 0.1 to 5.0% by mass.
[6] A carbon fiber reinforced thermoplastic resin molded body wherein the fiber bundle of [1] is combined with a matrix resin (C), and the volume ratio of the fiber bundle is 10 to 70% in the molded body.
[7] The carbon fiber reinforced thermoplastic resin molded body according to [6], wherein the matrix resin (C) is a modified polyolefin (C1) and/or an unmodified polyolefin (C2).
[8] The carbon fiber reinforced thermoplastic resin molded body according to [7], wherein the unmodified polyolefin (C2) is at least one polyolefin selected from a polypropylene (C2-1) having a melting point Tm of 120 to 165 °C measured by differential scanning calorimetry (DSC) and a polyethylene (C2-2) having a density of 890 to 960 $kg/m^3$.
[9] The carbon fiber reinforced thermoplastic resin molded body according to [7], wherein the amount of the modified polyolefin (C1) in the matrix resin (C) is 0 to 50% by mass.
[10] The carbon fiber reinforced thermoplastic resin molded body according to [6], which is in the form of a unidirectional material, a unidirectional laminated material or a random stampable sheet.
[11] A method for producing a reinforcing fiber bundle, which comprises,
immersing a carbon fiber bundle into an emulsion and then drying the carbon fiber bundle, wherein the emulsion contains
a modified polyolefin (A1) comprising at least a metal carboxylate bonded to the polymer chain, and
196 to 5,000 moles of an amine compound (B) represented by the following general formula (1), per one mole of the carboxylate group in the modified polyolefin (A1);

$$R\text{-}NH_2 \qquad (1)$$

wherein the formula (1), R is a hydrogen atom or a hydrocarbon group having 1 to 10 carbon atoms.

## Advantageous Effects of Invention

According to the present invention, adhesiveness of fiber to the matrix resin in a carbon fiber reinforced thermoplastic resin molded body can be improved since a modified polyolefin (A1) as a sizing agent adheres uniformly to the fiber surface. As a result, a sufficient reinforcing effect is manifested even if the fiber amount is smaller. The carbon fiber reinforced thermoplastic resin molded body using the reinforcing fiber bundle of the present invention is very useful, for example, for the application of a structural composite material of parts particularly requiring stiffness and durability such as, automobile parts and aircraft parts.

## Brief Explanation of Drawings

Fig. 1 is a SEM photograph of a unidirectional material obtained in Example 6.
Fig. 2 is a SEM photograph of a random stampable sheet obtained in Example 6.
Fig. 3 is a SEM photograph of a unidirectional material obtained in Comparative Example 4.
Fig. 4 is a SEM photograph of a unidirectional material obtained in Comparative Example 5.
Fig. 5 is a SEM photograph of the surface part of a reinforcing fiber bundle which was immersed continuously for 5 hours and then dried in Example 8.
Fig. 6 is a SEM photograph of the surface part of a reinforcing fiber bundle which was immersed continuously for 18 hours and then dried in Example 9.
Fig. 7 is a SEM photograph of the surface part of a reinforcing fiber bundle which was immersed continuously for 48 hours and then dried in Example 10.
Fig. 8 is a SEM photograph of the surface part of a reinforcing fiber bundle which was immersed continuously for 1 hour and then dried in Comparative Example 7.
Fig. 9 is a schematic view showing a sizing bath used in Examples 8 to 10 and Comparative Example 7.
Fig. 10 is a SEM photograph of a unidirectional material obtained in Example 11.

## Modes for Carrying Out the Invention

### [Carbon fiber bundle]

The reinforcing fiber bundle of the present invention is composed of a carbon fiber bundle treated with an emulsion containing a specific component. The carbon fiber bundle before treatment includes, for example, polyacrylonitrile (PAN)-based, pertoleum/coal pitch-based, rayon-based and lignin-based carbon fiber bundles. Among them, PAN-based carbon fiber bundle is particularly preferable from the standpoint of productivity on the industrial scale and properties. The average diameter of single yarns of a carbon fiber bundle is not particularly restricted, and it is preferably 1 to 20 $\mu$m, more preferably 4 to 10 $\mu$m from the standpoint of mechanical properties and surface appearance. Also the number of single yarns of a carbon fiber bundle is not particularly restricted, and it is preferably 100 to 100,000, more preferably 1,000 to 50,000 from the standpoint of productivity and mechanical properties.

It is preferable for the carbon fiber bundle before treatment that an oxygen-containing functional group is introduced into the fiber surface, for the purpose of enhancing adhesiveness of fiber to a matrix resin. The introduction amount of the oxygen-containing functional group can be specified, for example, by surface oxygen concentration ratio [O/C] which is a ratio of the numbers of oxygen (O) atoms to the number of carbon (C) atoms on the fiber surface measured by X-ray photoelectron spectroscopy. This surface oxygen concentration ratio is preferably 0.05 to 0.5, more preferably 0.08 to 0.4, particularly preferably 0.1 to 0.3. When the surface oxygen concentration ratio is 0.05 or more, the amount of the functional group on the carbon fiber surface can be ensured and strong adhesion to a matrix resin can be attained. In contrast, when the surface oxygen concentration ratio is 0.5 or less, carbon fiber handling and productivity are balanced.

### [Modified polyolefin (A1)]

The modified polyolefin (A1) used in the present invention is a modified polyolefin comprising at least a metal carboxylate bonded to the polymer chain. This modified polyolefin (A1) has, specifically, a carboxylate group represented by the following formula (2) constituting the metal carboxylate. The total amount of this carboxylate group is preferably 0.05 to 5 millimolar equivalents, more preferably 0.1 to 4 millimolar equivalents, particularly preferably 0.3 to 3 millimolar equivalents, per one gram of the resin. In the formula (2), $Q^+$ represents an alkali metal ion. As the alkali metal ion, a lithium ion, a sodium ion, a potassium ion and a rubidium ion can be specifically exemplified. Among them, a potassium

ion is preferable.

[Chemical Formula 1]

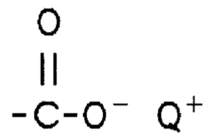 ...... (2)

As the raw material of the modified polyolefin (A1) (raw material polyolefin (A0)), for example, ethylene-based polymers having an ethylene-derived skeleton content of over 50% by mole and propylene-based polymers having a propylene-derived skeleton content of over 50% by mole can be used without restriction. The ethylene-based polymer includes, for example, an ethylene homopolymer and copolymers composed of ethylene and an $\alpha$-olefin having 3 to 10 carbon atoms. The propylene-based polymer includes, for example, a propylene homopolymer and copolymers composed of propylene and ethylene and/or an $\alpha$-olefin having 4 to 10 carbon atoms. Specific examples of the suitable raw material polyolefin (A0) include a homopolypropylene, a homopolyethylene, an ethylene/propylene copolymer, a propylene/1-butene copolymer and an ethylene/propylene/1-butene copolymer.

The modified polyolefin (A1) is, for example, a modified resin in which a carboxylic group, a carboxylic anhydride group or a carboxylate ester group is graft-introduced into the polymer chain of the raw material polyolefin (A0) as described above and the group is converted to the form of a salt with a cation. In the following explanations, a carboxylic group, a carboxylic anhydride group and a carboxylate ester group introduced into the polymer chain are collectively referred to as a graft carboxylic group in some cases. For preparation of the modified polyolefin (A1), for example, monomers having a carboxylic group, a carboxylic anhydride group or a carboxylate ester group can be used as a modifying agent. Each functional group of these monomers may be neutralized or saponified, or may not be neutralized or saponified. As such monomers, ethylene-based unsaturated carboxylic acids and anhydrides thereof and esters thereof are preferable. Furthermore, carboxylic monomers having an unsaturated vinyl group other than the ethylene-based unsaturated carboxylic acids can also be used.

Specific examples of the ethylene-based unsaturated carboxylic acid used for production of the modified polyolefin (A1) include (meth)acrylic acid, maleic acid, fumaric acid, tetrahydrophthalic acid, itaconic acid, citraconic acid, crotonic acid and isocrotonic acid. Specific examples of its anhydride include nadic acid (endo-cis-bicyclo[2.2.1]hept-5-ene-2,3-dicarboxylic acid), maleic anhydride and citraconic anhydride. Specific examples of its ester include methyl, ethyl or propyl monoesters or diesters of the ethylene-based unsaturated carboxylic acid. Two or more of these monomers may be used in combination. Among them, ethylene-based unsaturated carboxylic anhydrides are preferable, and maleic anhydride is particularly preferable.

For example, by grafting the monomer as described above to the polymer chain of the raw material polyolefin (A0) such as ethylene-based resins and propylene-based resins, a desired graft carboxylic group can be introduced into the polymer chain. Specific methods thereof include, for example, a method in which the raw material polyolefin (A0) and the above-described monomer are graft-reacted in the presence of a polymerization initiator in an organic solvent, then, the solvent is removed; a method in which the raw material polyolefin (A0) is melted with heating, and its melted material, the above-described monomer and a polymerization initiator are mixed, stirred and graft-reacted; a method in which a mixture of the raw material polyolefin (A0), the above-described monomer and a polymerization initiator is fed to an extruder, and graft-reacted while kneading with heating.

The polymerization initiator used in these methods is not particularly restricted, and known polymerization initiators can be used without limitation. Specific examples thereof include benzoyl peroxide, dichlorobenzoyl peroxide, dicumyl peroxide, di-tert-butyl peroxide, 2,5-dimethyl-2,5-di(peroxybenzoate)hexyne-3 and 1,4-bis(tert-butylperoxyisopropyl)benzene. Two or more of polymerization initiators may be used in combination. Also the organic solvent is not particularly restricted, and specific examples thereof include aromatic hydrocarbons such as xylene and toluene; aliphatic hydrocarbons such as hexane and heptane; alicyclic hydrocarbons such as cyclohexane; and ketone solvents such as methyl ethyl ketone and methyl isobutyl ketone. Two or more of organic solvents may be mixed and used. Among them, aromatic hydrocarbons, aliphatic hydrocarbons and alicyclic hydrocarbons are preferable, and aliphatic hydrocarbons and alicyclic hydrocarbons are more preferable.

If desired, the raw material polyolefin (A0) having a carboxylic group, a carboxylic anhydride group or a carboxylate ester group introduced as described above is neutralized or saponified, to obtain the modified polyolefin (A1) comprising at least a metal carboxylate bonded to the polymer chain. Specifically, for example, neutralization or saponification may be performed, where necessary, in preparing an emulsion containing the polyolefin. The modified polyolefin (A1) may contain an unmodified polyolefin depending on modification conditions, but, in the present invention, a modified body including such an unmodified polyolefin is defined as the modified polyolefin.

When required, an unmodified polyolefin (A2) containing neither a graft carboxylic group nor a metal carboxylate thereof may be used together, in addition to the modified polyolefin (A1), in the present invention. When the unmodified polyolefin (A2) is used together, the content of the modified polyolefin (A1) is 1 to 50% by mass, preferably 3 to 40% by mass, more preferably 5 to 30% by mass, with respect to the total amount of the modified polyolefin (A1) and the unmodified polyolefin (A2). By keeping the content within this range, the mechanical strength of the carbon fiber reinforced thermoplastic resin molded body of the present invention is improved. As the unmodified polyolefin (A2), the raw material polyolefins (A0) for preparing the modified polyolefin (A1) mentioned previously can be used without restriction. The unmodified polyolefin (A2) may be the raw material polyolefin (A0) itself for preparing the modified polyolefin (A1) or may be a polyolefin different from the raw material polyolefin (A0), and it is preferable that the unmodified polyolefin (A2) and the raw material polyolefin (A0) have mutually different characteristics.

In preferable embodiments of the present invention, the unmodified polyolefin (A2) includes, for example, a homopolypropylene, a propylene/ethylene copolymer (ethylene-derived skeleton content; 3 to 95% by mole), a propylene/1-butene copolymer (1-butene-derived skeleton content; 5 to 95% by mole), a propylene/ethylene/1-butene copolymer (ethylene-derived skeleton content; 10 to 25% by mole, 1-butene-derived skeleton content; 1 to 30% by mole), an ethylene/vinyl acetate copolymer (vinyl acetate-derived skeleton content; 25 to 50% by mass) and a blend of two or more different polymers selected from them.

[Amine compound (B)]

The amine compound (B) used in the present invention is a primary amine compound represented by the following general formula (1):

R-NH2 (1)

Wherein the formula (1), R is a hydrogen atom or a hydrocarbon group having 1 to 10 carbon atoms.

When R is a hydrocarbon group having 11 or more carbon atoms, an amine compound cannot be removed sufficiently in some case in a step of drying a carbon fiber after immersion into an emulsion as described later, therefore, such a hydrocarbon group is undesirable. This hydrocarbon group may be an aromatic hydrocarbon group, an aliphatic hydrocarbon group or an alicyclic hydrocarbon group, and preferable is an aliphatic hydrocarbon group or an alicyclic hydrocarbon group from the standpoint of working environments and sanitation of an operator in sizing treatment.

Specific examples of the preferable amine compound (B) include ammonia (ammonia water), methylamine, ethylamine, n-butylamine, isobutylamine, sec-butylamine, n-pentylamine, isoamylamine, n-hexylamine, cyclohexylamine, heptylamine, octylamine and decylamine. Among them, ammonia (ammonia water) is preferable from the standpoint of easiness of removal in a drying step and easiness of availability.

[Emulsion]

The emulsion used in the present invention is a liquid containing at least the modified polyolefin (A1) and the amine compound (B) explained above and in which a dispersoid (mainly, modified polyolefin (A1)) is dispersed in a dispersion medium (e.g., water). Typically, it is an emulsion having a form in which the granulous modified polyolefin (A1) is dispersed in an aqueous solution containing the amine compound (B).

The mass ratio of the modified polyolefin (A1) in the emulsion is 0.001 to 10% by mass, preferably 0.01 to 5% by mass. The amount of the amine compound (B) in the emulsion is 196 to 5,000 moles, preferably 196 to 3,000 moles, more preferably 196 to 1,000 moles, per 1 mole of a carboxylate group in the modified polyolefin (A1). By using such a specific amount of the amine compound (B), aggregation of the modified polyolefin (A1) in the emulsion can be suppressed effectively.

A surfactant (D) may be added into the emulsion, in an amount in the range not deteriorating the present invention. By use of the surfactant (D), aggregation of polymer particles in the emulsion can be prevented more effectively. The amount of the surfactant (D) in the emulsion is preferably 5 parts by mass or less with respect to 100 parts by mass of the modified polyolefin (A1). When the amount is over 5 parts by mass, adhesiveness lowers in some cases.

The kind of the surfactant (D) is not particularly restricted. For example, any of surfactants in which the hydrophilic portion is ionic (cationic, anionic or ampholytic) and surfactants in which the hydrophilic portion is nonionic (nonionic surfactant) can be used. Among them, nonionic surfactants not containing a counter ion of a metal or halogen promoting decomposition of a thermoplastic resin are preferable. When the modified polyolefin (A1) adheres to a carbon fiber, also the nonionic surfactant adheres simultaneously, thereby improving the opening property of a carbon fiber bundle in an opening step. Particularly, a nonionic surfactant which is liquid at least 20°C is effective for improvement of the opening property of a carbon fiber bundle.

It is also preferable to concomitantly use a compound having a function of lowering the surface tension of the

emulsion, together with the surfactant (D), from the standpoint of prevention of aggregation. Specific examples of such a compound include lower aliphatic alcohols, alicyclic alcohols, glycols and polyvinyl alcohol. The amount of this compound may be approximately the same as that of the surfactant.

[Treatment of carbon fiber bundle]

In the present invention, the treatment of a carbon fiber bundle is conducted using the emulsion explained above. This treatment is a treatment of adhering at least the modified polyolefin (A1) to the fiber surface (preferably, into the fiber), and typically is a sizing treatment. Since a specific amount of the amine compound (B) coexists with the modified polyolefin (A1) in the emulsion, aggregation of the modified polyolefin (A1) is suppressed effectively and the modified polyolefin (A1) adheres uniformly to the fiber surface, resulting in improvement in adhesiveness. The total adhesion amount of the modified polyolefin (A1) and the unmodified polyolefin (A2) which is used if necessary in the reinforcing fiber bundle is preferably 0.1 to 5.0% by mass, more preferably 0.5 to 2.0% by mass.

Particularly, this treatment is preferably carried out by immersing the carbon fiber bundle into the emulsion and then drying the carbon fiber bundle.

The specific method includes, for example, a spray method, a roller immersion method and a roller transfer method. These methods may be used in combination. Among them, a roller immersion method is preferable from the standpoint of productivity and uniformity. Particularly, it is preferable that opening and squeezing are repeated via an immersion roller provided in an emulsion bath, thereby penetrating the emulsion into the inside of the carbon fiber bundle. Regulation of the total adhesion amount of the modified polyolefin (A1) and the unmodified polyolefin (A2) which is used if necessary in the carbon fiber bundle can be conducted, for example, by regulating the mass ratio of the modified polyolefin (A1) and the unmodified polyolefin (A2) in the emulsion, and regulating a squeezing roller.

Thereafter, if necessary, low boiling components such as water and the amine compound (B) are removed by a drying step of the carbon fiber bundle. By this, the reinforcing fiber bundle in which at least the modified polyolefin (A1) adheres to the fiber surface (and, preferably, into the fiber) is obtained. It is preferable to completely remove low boiling components such as water and the amine compound (B), however, the low boiling components may partially remain according to circumstances. The drying method is not particularly restricted, and methods such as a thermal treatment, air drying and centrifugation can be used. Among them, a thermal treatment is preferable from the standpoint of cost. As the heating means, for example, hot air, a hot plate, a roller and an infrared heater can be used. Regarding the temperature of the drying treatment, it is preferable to remove water and alcohol components at a surface temperature of the carbon fiber bundle in the range of 50 to 200°C.

[Carbon fiber reinforced thermoplastic resin molded body]

The reinforcing fiber bundle of the present invention explained above is very useful as a reinforcing material of the thermoplastic resin molded body. Namely, the carbon fiber reinforced thermoplastic resin molded body of the present invention is a molded body obtained by combining the reinforcing fiber bundle of the present invention with the matrix resin (C). The volume ratio of the reinforcing fiber bundle in this molded body is 10 to 70%, preferably 25 to 55%. The reinforcing fiber bundle of the present invention manifests a sufficient reinforcing effect even if the fiber amount is smaller since adhesiveness of the bundle with the matrix resin is excellent.

The matrix resin (C) is not particularly restricted, and known resins can be used. Specific examples of the matrix resin (C) include thermoplastic resins such as polyolefin-based resins, polyamide resins, polyester resins, polycarbonate resins, polyacetal resins, polyether ketone resins, polyether ether ketone resins and polysulfone resins. Among them, polyolefin-based resins are preferable, and the modified polyolefin (C1) and/or the unmodified polyolefin (C2) are particularly preferable, from the standpoint of high speed moldability, lightweightness, mechanical properties of the molded article and material recyclability. In the case of concomitant use of the unmodified polyolefin (C2), the blending amount of the modified polyolefin (C1) having a maleic anhydride graft modification ratio of 0.1 to 7% by mass is preferably 0.1 to 30 parts by mass, more preferably 1 to 20 parts by mass per 100 parts by mass of the unmodified polyolefin (C2), thereby improving further the adhesion strength of the fiber with the resin. The preparation method of the modified polyolefin (C1) can be carried out according to the preparation method of the modified polyolefin (A1) described above.

In one suitable embodiment in the present invention, the unmodified polypropylene (C2) and/or the modified polypropylene (C1) such as a propylene homopolymer or a propylene/$\alpha$-olefin random copolymer are used as the matrix resin (C). Particularly, it is preferable that the unmodified polyolefin (C2) is at least one selected from polypropylene (C2-1) having a melting point Tm measured by differential scanning calorimetry (DSC) of 120 to 165°C and polyethylene (C2-2) having a density of 890 to 960 $kg/m^3$. The content of the modified polyolefin (C1) is preferably 0 to 50% by mass in the matrix resin (C).

It is preferable that the reinforcing fiber bundle is opened if necessary before combining with the matrix resin (C). By this opening, the matrix resin (C) is sufficiently impregnated in the reinforcing fiber bundle, and a high grade

molded body showing little unevenness in physical properties such as strength is obtained.

The form of the carbon fiber reinforced thermoplastic resin molded body includes, for example, a unidirectional material, a unidirectional laminated material and a random stampable sheet (pseudoisotropic material). The carbon fiber reinforced thermoplastic resin molded body may also be in the form of a cross-ply laminated material, a long fiber-containing pellet or a woven material.

(Unidirectional material (UD material))

The unidirectional material (UD material) is typically a molded body containing fibers obtained by arranging an opened fiber bundle unidirectionally. For example, if an opened fiber bundle is arranged unidirectionally, then, brought into contact with the melted matrix resin (C), then, a unidirectional carbon fiber reinforced thermoplastic resin molded body is obtained. Furthermore, a plurality of unidirectional materials (unidirectional carbon fiber reinforced thermoplastic resin molded body) may be laminated to obtain an integrated laminate.

(Unidirectional laminated material)

The unidirectional laminated material is a laminate such as, typically, a unidirectional laminate obtained by laminating any number (n) of unidirectional materials in the same direction (0°).

(Random stampable sheet)

The random stampable sheet (pseudoisotropic material) is a sheet which shows isotropic physical properties when observed with a certain size (for example, dimension of 5-fold or more of fiber length) and can be molded into a complicated shape by stamp molding or press molding. Typically, it is a sheet-formed molded body obtained by cutting a unidirectional material into small pieces (for example, 10 x 10 mm to 100 x 100 mm), placing the pieces in any directions, laminating them and compressing them. The random stampable sheet includes, for example, one in which anisotropy of a mechanical property due to fiber orientation is decreased as much as possible, one obtained by impregnating a matrix resin into fiber bundles cut into lengths of 5 to 50 mm, and one obtained by sandwiching a fiber bundle between films formed from a matrix resin to form a sheet.

(Cross-ply laminated material)

The cross-ply laminated material, which is a laminate integrated by laminating a plurality of unidirectional carbon fiber reinforced thermoplastic resin molded bodies in two different directions, includes, for example, a ((0°/90°)n)s laminate obtained by laminating the molded bodies to give a front and back symmetric structure of 0°/90°/0°/90°/90°/0°/90°/0°; a ((0°/45°/90°/135°)n)s laminate obtained by laminating the molded bodies in four different directions to give a front and back symmetric structure of 0°/45°/90°/135°/135°/90°/45°/0°, a laminate obtained by laminating the molded bodies in two different directions to give a front and back asymmetric structure of 0°/90°/0°/90°/0°/90°/0°/90°/0, and a laminate obtained by further laminating a woven fabric onto the surface of these laminated materials.

The specific method for producing the unidirectional carbon fiber reinforced thermoplastic resin molded body is not particularly restricted. For example, according to a melt extrusion lamination method and a pultrusion method, a molded body in which the matrix resin (C) is sufficiently impregnated into fiber is obtained. On the other hand, in the case of production of a molded body in which impregnation of the matrix resin (C) is suppressed, that is, a molded body having a semi-impregnated layer, it is recommendable that, for example, a reinforcing fiber bundle is arranged unidirectionally on a sheet composed of the matrix resin (C) and, if necessary, pressed with heating.

(Long fiber-containing pellet)

The long fiber-containing pellet is a molded body in the form of a pellet, as a molding material for use in various molding methods. For example, a reinforcing fiber bundle is impregnated with the modified polyolefin (A1) in an extrusion molding machine or in an impregnation die, to obtain a strand, and this strand is cut into desired length, thus, a core-sheath long fiber-containing pellet composed of a carbon fiber and a thermoplastic resin can be obtained.

The length of the long fiber-containing pellet is preferably 3 to 100 mm, more preferably 5 to 50 mm. A desired molded article is obtained, for example, by conducting injection molding or press molding using this pellet. Furthermore, a recent method called a direct molding method, that is, a method in which a matrix resin and a continuous fiber are fed to a molding machine, cutting of a long fiber and dispersion into the matrix resin are simultaneously conducted in the molding machine and the resultant material is subjected to injection molding or press molding as it is can also be used.

Furthermore, molded articles obtained by press-molding or cutting-working a unidirectional material, a unidirectional laminated material, a random stampable sheet (pseudoisotropic material), a cross-ply laminated material or a woven material are also useful.

EXAMPLES

The present invention will be illustrated further in detail by examples below, but the present invention is not limited to them. Materials used in examples are as described below.

[Carbon fiber bundle]

Examples 1 to 4, Comparative Example 1: commercially available carbon fiber (manufactured by Formosa Plastics Corporation, trade name: TC-36S (12K), [O/C] = 0.22)
Examples 5 and 7, Comparative Examples 2, 3 and 6: commercially available carbon fiber (manufactured by Formosa Plastics Corporation, trade name: TC-35 (12K), [O/C] = 0.25)
Examples 8 to 10, Comparative Example 7: commercially available carbon fiber (manufactured by Formosa Plastics Corporation, trade name: TC-35R (12K), [O/C] = 0.30)

[Raw material resins for emulsion]

(Maleic anhydride modified polypropylene)

The maleic anhydride modified polypropylene prepared in Production Example 1 described later was used.

(Maleic anhydride modified polyethylene-based resin)

The maleic anhydride modified polyethylene prepared in Production Example 2 described later was used.

(Unmodified polypropylene-based resin)

The propylene/1-butene/ethylene copolymer prepared in Production Example 3 described later was used.

(Unmodified polyethylene-based resin)

An ethylene/propylene random copolymer having a density of 0.87 g/cm$^3$ and a MFR (230°C) of 5.4 g/10 minutes (abbreviated as EPR: TAFMER-P manufactured by Mitsui Chemicals Inc., ethylene-derived skeleton content = 82% by mole) was used.

[Amine compound (B)]

Ammonia water (manufactured by JUNSEI Chemical Co., Ltd., ammonia concentration: 28% by mass)

[Matrix resin (C)]

Examples 1 to 4, Comparative Examples 1 to 3: Mixtures of a commercially available unmodified propylene resin (manufactured by Prime Polymer Co., Ltd., trade name: Prime Polypro J105G, MFR (230°C, load: 2.16 kg) = 9.0 g/10 minutes, melting point = 162°C) and a commercially available acid modified propylene resin (manufactured by Mitsui Chemicals Inc., registered trademark: ADMER QE800, MFR (230°C, load: 2.16 kg) = 9.0 g/10 minutes) (mass ratio; J105/QE800 = 95/5 or 90/10, either one or both of them)
Example 5: A mixture of a commercially available unmodified propylene resin (manufactured by Prime Polymer Co., Ltd., trade name: Prime Polypro J106MG, MFR (230°C, load: 2.16 kg) = 15.0 g/10 minutes, melting point = 162°C) and a commercially available acid modified propylene resin (manufactured by Mitsui Chemicals Inc., registered trademark: ADMER QE800, MFR (230°C, load: 2.16 kg) = 9.0 g/10 minutes) (mass ratio; J106MG/QE800 = 90/10)

[Production Example 1]

(Preparation of maleic anhydride modified polypropylene)

With respect to 100 parts by mass of a polypropylene (manufactured by Prime Polymer Co., Ltd., trade name:

J106G, MFR (230°C, 2.16 kg) = 15 g/10 minutes), 1 part by mass of a dialkyl peroxide (manufactured by NOF Corporation, PERHEXA (registered trademark) 25B) and 3 parts by mass of a powderized maleic anhydride (manufactured by NOF Corporation, CRYSTAL MAN (registered trademark)) were premixed. This mixture was fed to a 30 mmφ twin screw extruder having a temperature adjusted to 190°C and melt-kneaded at 200 rpm to obtain a strand which was then cooled in a water tank, to obtain a maleic anhydride modified polypropylene. For removing the unmodified residual maleic anhydride, this maleic anhydride modified polypropylene was vacuum-dried at 40°C for 2 hours. The resultant maleic anhydride modified polypropylene had a maleic acid content of 4.5% by mass.

The method of measuring the graft ratio is as follows; 200 mg of a polymer and 4800 mg of chloroform were placed in a 10 ml sample bottle and heated at 50°C for 30 minutes, to attain complete dissolution. Chloroform was charged in a liquid cell made of NaCl and having an optical path length of 0.5 mm, to make the background. Next, the dissolved polymer solution was charged in the liquid cell, and the infrared absorption spectrum of the sample was measured at a cumulated number of 32 times using a photometer (manufactured by JASCO Corporation, device name: FT-IR 460 plus). Regarding the graft ratio of maleic anhydride, absorption of a carbonyl group in a solution prepared by dissolving maleic anhydride in chloroform was measured and a calibration curve was made. From the area of the absorption peak of a carbonyl group of the sample (maximum peak around 1780 $cm^{-1}$, 1750 to 1813 $cm^{-1}$), the acid component content in the polymer was calculated based on the calibration curve made previously, and the calculated value was adopted as the graft ratio (% by mass).

[Production Example 2]

(Preparation of maleic anhydride modified polyethylene-based resin)

An ethylene/propylene copolymer (ethylene-derived skeleton content = 95 % by mole, density = 920 $kg/m^3$) (500 g) was charged in a glass reactor, and melted at 160°C under a nitrogen atmosphere. Then, 15 g of maleic anhydride and 1.5 g di-t-butyl peroxide were continuously fed to the above-described reaction system (temperature: 160°C) over a period of 5 hours. Thereafter, these were further reacted for 1 hour with heating, then, a deaeration treatment was carried out for 0.5 hours in vacuum of 10 mmHg while maintaining the melted condition, to remove volatile components. Thereafter, the reaction product was cooled, to obtain a maleic anhydride graft-modified polyethylene-based resin. The maleic anhydride graft amount in this polymer was measured, to resultantly find a value of 2.7% by mass.

[Production Example 3]

(Preparation of unmodified polypropylene-based resin)

A propylene/1-butene/ethylene copolymer was obtained, according to a method described in Polymerization Example 4 of the specification of WO2006/098452. In the copolymer, the propylene-derived skeleton content was 66 % by mole, the ethylene-derived skeleton content was 11 % by mole, the 1-butene-derived skeleton content was 23 % by mole and the melt flow rate (230°C, load: 2.16 kg) was 6.5 g/10 minutes.

[Example 1]

(Preparation of emulsion)

10 parts by mass of the maleic anhydride modified polypropylene obtained in Production Example 1, 100 parts by mass of the propylene/1-butene/ethylene copolymer obtained in Production Example 3 and 3 parts by mass of potassium oleate as the surfactant (D) were mixed. This mixture was treated according to a method described in examples of JP H10-131048 using a twin screw extruder (manufactured by Ikegai Corp., device name: PCM-30, L/D = 40), to prepare an emulsion. The resultant emulsion (water dispersion) had a solid content of 45% by mass and an acid value of 11.5 mg KOH in terms of the solid content of 1 g.

Then, 2.3 parts by mass of this emulsion, 5 parts by mass of ammonia water (ammonia concentration: 28% by mass) and 92.7 parts by mass of distilled water were mixed, to obtain an emulsion containing the components (A) and (B). In this emulsion, the concentration of the modified polypropylene containing a potassium carboxylate derived from the maleic anhydride modified polypropylene was 0.09% by mass, the concentration of the propylene/1-butene/ethylene copolymer was 0.91% by mass, and the concentration of ammonia ($NH_3$) was 1.4% by mass.

(Treatment of carbon fiber bundle)

This emulsion was allowed to adhere to a carbon fiber bundle composed of a commercially available carbon

fiber (manufactured by Formosa Plastics Corporation, trade name: TC-36S (12K)) using a roller impregnation method. Then, the emulsion was dried at 130°C for 2 minutes online to remove low-boiling components, to obtain the reinforcing fiber bundle of the present invention. Then, this reinforcing fiber bundle and a mixture of a commercially available unmodified propylene resin (manufactured by Prime Polymer Co., Ltd., trade name: Prime Polypro J105G) and a commercially available acid modified propylene resin (manufactured by Mitsui Chemicals Inc., registered trademark: ADMER QE800) (mass ratio: 95/5 or 90/10) as the matrix resin (C) were used, to fabricate the carbon fiber reinforced thermoplastic resin molded body of the present invention.

[Examples 2 to 4 and Comparative Example 1]

In the same manner as in Example 1 excepting that the blending composition was changed so that the concentration of ammonia ($NH_3$) in the emulsion was as shown in Table 1, an emulsion was prepared, a reinforcing fiber bundle was fabricated and the carbon fiber reinforced thermoplastic resin molded body of the present invention was fabricated.

[Example 5]

The blending composition was controlled so that the concentration of ammonia ($NH_3$) in the emulsion was 2.8% by mass, and this emulsion was allowed to adhere to a carbon fiber bundle composed of a commercially available carbon fiber (manufactured by Formosa Plastics Corporation, trade name: TC-35(12K)) using a roller immersion method. Then, the emulsion was dried at 130°C for 2 minutes online to remove low-boiling components, to fabricate a reinforcing fiber bundle. Then, this reinforcing fiber bundle and a mixture of a commercially available unmodified propylene resin (manufactured by Prime Polymer Co., Ltd., trade name: Prime Polypro J106MG) and a commercially available acid modified propylene resin (manufactured by Mitsui Chemicals Inc., registered trademark: ADMER QE800) (mass ratio: 90/10) as the matrix resin (C) were used, to fabricate the carbon fiber reinforced thermoplastic resin molded body of the present invention.

[Comparative Example 2]

A commercially available carbon fiber bundle (manufactured by Formosa Plastics Corporation, standard brand in which an epoxy type sizing agent adheres to trade name TC-35(12K)), and a mixture of a commercially available unmodified propylene resin (manufactured by Prime Polymer Co., Ltd., trade name: Prime Polypro J105G) and a commercially available acid modified propylene resin (manufactured by Mitsui Chemicals Inc., registered trademark: ADMER QE800) (mass ratio: 90/10) as the matrix resin (C) were used, to fabricate a carbon fiber reinforced thermoplastic resin molded body.

[Comparative Example 3]

An aqueous solution having a concentration of polyvinyl alcohol (PVA) (manufactured by Chang Chun Plastics, trade name: BP-05G) of 0.7% by mass was allowed to adhere to a commercially available carbon fiber (manufactured by Formosa Plastics Corporation, trade name: TC-35(12K)) using a roller impregnation method. Then, the emulsion was dried at 140°C for 1 minute online to remove water, to obtain a reinforcing fiber bundle to which 0.4% by mass of PVA adhered. This reinforcing fiber bundle, and a mixture of a commercially available unmodified propylene resin (manufactured by Prime Polymer Co., Ltd., trade name: Prime Polypro J105G) and a commercially available acid modified propylene resin (manufactured by Mitsui Chemicals Inc., registered trademark: ADMER QE800) (mass ratio: 90/10) as the matrix resin (C) were used, to fabricate a carbon fiber reinforced thermoplastic resin molded body.

The evaluation results in Examples 1 to 5 and Comparative Examples 1 to 3 are shown in Table 1. Measurements were conducted by the following methods.

<Total adhesion amount of component (A1) and component (A2)>

About 5 g of a reinforcing fiber bundle was dried at 120°C for 3 hours, and its mass $W_1$ (g) was measured. Then, the reinforcing fiber bundle was heated at 450°C in a nitrogen atmosphere for 15 minutes, then, cooled down to room temperature, and its mass $W_2$ (g) was measured. The adhesion amount was calculated by the following formula.

$$\text{Adhesion amount (\%)} = [(W_1 - W_2)/W_2] \times 100$$

<Interface shear strength>

The interface shear strength (fragmentation method) between the reinforcing fiber bundle of the present invention and the matrix resin was measured by the following method. Two resin films of 100 μm thickness (20 cm × 20 cm square) composed of the matrix resin (C) were fabricated. A single fiber of 20 cm length extracted from the reinforcing fiber bundle was linearly placed on one resin film, and the other resin film was superposed thereon so as to sandwich the single fiber. This was pressed at a pressure of 4 MPa at 200°C for 3 minutes, to fabricate a sample in which the single fiber was embedded into the resin. This sample was further cut out, to obtain a test piece of 0.2 mm thickness, 5 mm width and 30 mm length in which the single fiber was buried at the center part. According to the same procedure, five test pieces were fabricated in total.

These five test pieces were subjected to a tensile test under conditions of a test length of 14 mm and a strain rate of 0.3 mm/min using a usual tensile test instrument, and when the breakage of the fiber no longer occurs, the average rupture fiber length (l) was measured using a transmission optical microscope. The interface shear strength (τ) (MPa) by a fragmentation method was determined by the following formula.

$$\tau = (\sigma f \times d)/2Lc, \qquad Lc = (4/3) \times L$$

lin the formula, Lc represents the critical fiber length, L represents the average value of final fiber rupture length (μm), σf represents the fiber tensile strength (MPa) and d represents the fiber diameter (μm). (Reference literature: Ohsawa et., Journal of Society of Fiber Science and Technology, Japan, Vol. 33, No. 1 (1977))

σf was determined by the following method supposing that the fiber tensile strength distribution complies with Weibull distribution. That is, a relational formula between the sample length and the average tensile strength was determined by least square approach from the average tensile strengths obtained when the sample length was 5 mm, 25 mm and 50 mm using single fibers, and the average tensile strength when the sample length was Lc was calculated.

Table 1

| | | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|---|
| Carbon Fiber | | | TC-36S | TC-36S | TC-36S | TC-36S | TC-35 | TC-36S | TC-35 | TC-35 *1) |
| Composition of Emulsion (wt%) | Component (A1) | Potassium Carboxylate-containing Modified PP | 0.09 | 0.09 | 0.09 | 0.09 | 0.09 | 0.09 | 0 | 0 |
| | Component (A2) | Propylene/Ethylene/ Butene Copolymer | 0.91 | 0.91 | 0.91 | 0.91 | 0.91 | 0.91 | 0 | 0 |
| | Com ponent (B) | $NH_3$ | 1.4 | 2.8 | 4.2 | 5.6 | 2.8 | 0 | 0 | 0 |
| | | Amount of $NH_3$ per 1 mole of Carboxylate Group (moles) | 412 | 824 | 1235 | 1647 | 824 | 0 | 0 | 0 |
| Total Amount of Components (A1) and (A2) adhered to Rreinforcing Fiber Bundle (wt%) | | | 0.7 | 0.7 | 0.6 | 0.6 | 0.8 | 1.6 | 0 | 0 |
| Interface Shear Strength (MPa) | Component (C) | PP containing 5 wt% of QE800 | 18.5 | 20.6 | 21.1 | 16.7 | - | 16.7 | - | - |
| | | PP containing 10 wt% of QE800 | - | 24.1 | 22.8 | - | 20.8 | - | 13.6 | 18.4 |

*1) A reinforcing fiber bundle obtained by allowing a 0.7 wt% polyvinyl alcohol aqueous solution to adhere to TC-35.

[Example 6]

(Unidirectional material)

A unidirectional material sheet was fabricated according to the following procedure by an apparatus obtained by combining an apparatus described in JP 2013-227695 with an extruder for melting a resin, using the reinforcing fiber bundle obtained in Example 5. As the matrix resin (C) in this procedure, the same resin as used in Example 5 was used. Specifically, the reinforcing fiber bundle was opened by an opening apparatus described in JP 2013-227695, and the heated reinforcing fiber bundle and the matrix resin (C) melted by the extruder were processed into a film by a T-die, the film was sandwiched between release papers, heated and pressed by a pressure roller, thereby impregnating the matrix resin (C) into the reinforcing fiber bundle, and then cooled and solidified, to obtain a unidirectional material sheet. The temperatures of the extruder and the T-die were 250°C, and the temperature of the pressure roller was 275°C.

The resultant unidirectional material sheet had a thickness of 130 μm and a fiber volume fraction Vf of 0.4. For confirming its impregnation condition, the unidirectional material sheet was observed using SEM (scanning electron microscope) (manufactured by JEOL, device name: JSM7001F, acceleration voltage: 10 kV, reflected electron image). Specifically, the unidirectional material was embedded in an epoxy resin, the surface was polished by a polishing machine to form a smooth cross-sectional surface, and SEM observation was performed. Fig. 1 is its SEM photograph (500-fold), and the white portion is a filament of a reinforcing fiber bundle and the black portion is the matrix resin (C). As apparent from this SEM photograph, the matrix resin (C) was very well impregnated into the reinforcing fiber bun-die and unimpregnated portions and voids were not observed.

A test method of the fiber content ratio of a carbon fiber reinforced plastic is described in JIS K7075, however, the above-described fiber volume fraction was determined by the following method in this procedure. The sample sheet was cut into 50 mm × 50 mm square, and its mass Wc (g) was measured. This cut sample was heated at 480°C for 1 hour, thus, the resin was thermally degraded and removed, and the mass Wf (g) of the only carbon fiber was measured, and the fiber volume fraction Vf was determined by the following formula.

$$\text{Fiber volume fraction } V_f = (W_f/W_c) \times \rho c/\rho f$$

In the formula, pc represents the sample density (g/cm$^3$), and pf represents the density (g/cm$^3$) of carbon fiber used in the sample.

(Unidirectional laminated material)

Furthermore, eight layers of this unidirectional material sheet were laminated in 0° direction, and this laminate was placed in a press machine (manufactured by SHINTO Metal Industries Corporation, device name: NSF-37HHC) equipped with a flat mold. Then, the laminate was compressed under pressure of 5 MPa at 200°C for 3 minutes, and then, immediately cooled while keeping the pressing condition, to obtain a unidirectional laminated material of 1.0 mm thickness.

The resultant unidirectional laminated material was cut out to fabricate four test pieces (250 mm × 15 mm), and a tensile test was conducted at a rate of 2 mm/min using a tensile tester (manufactured by Zwick, device name: Z100) to measure elastic modulus and rupture strength (according to ASTM D3039), and the measured values of the four test pieces were averaged. As a result, elastic modulus was 96.6 GPa and rupture strength was 935 MPa. Furthermore, interlaminar shear stress (ILSS) was measured (according to ASTM D2344) using a short span bending test equipment (manufactured by Shimadzu Corp., device name; Shimadzu Autograph AG-5KNX). As a result, ILSS was 28.9 MPa.

(Random stampable sheet)

The above-described unidirectional material sheet was cut into small pieces of 30 to 50 mm × 30 to 50 mm, and these small pieces were placed in random directions so that 8 to 9 layers overlap at any places, to obtain a laminate (randomly oriented body) which was then compressed under pressure of 10 MPa at 200°C for 3 minutes using the same apparatus as that used in fabricating the unidirectional laminated material, and then, immediately cooled while keeping the pressing condition, to obtain a random stampable sheet of 1.0 mm thickness.

The resultant random stampable sheet was subjected to the same tensile test as that conducted for the unidirectional laminated material. As a result, the elastic modulus was 22.6 GPa and the rupture strength was 138 MPa. Furthermore, SEM observation was performed in the same manner as for the above-described unidirectional material

sheet. Fig. 2 is its SEM photograph (150-fold). As apparent from this SEM photograph, eight layers composed of fibers arranged in the same direction were laminated in arbitrary fiber orientation.

[Comparative Example 4]

(Unidirectional material)

A unidirectional material sheet was fabricated in the same manner as in Example 6, excepting that the commercially available carbon fiber bundle (manufactured by Formosa Plastics Corporation, standard brand in which an epoxy type sizing agent adheres to trade name TC-35(12K)) used in Comparative Example 2 was used, and SEM observation thereof was performed. Fig. 3 is its SEM photograph (500-fold). As apparent from this SEM photograph, peeled portions were present at the interface between the filament of the reinforcing fiber bundle and the matrix resin (C).

(Unidirectional laminated material)

Furthermore, a unidirectional laminated material was fabricated in the same manner as in Example 6 using this unidirectional material sheet, and the interlaminar shear stress (ILSS) was measured. Its ILSS was 17.3 MPa.

[Comparative Example 5]

(Unidirectional material)

A unidirectional material sheet was fabricated in the same manner as in Example 6, excepting that the reinforcing fiber bundle obtained in Comparative Example 3 was used, and SEM observation thereof was performed. Fig. 4 is its SEM photograph (500-fold). As apparent from this SEM photograph, unimpregnated portions (white portions) of the matrix resin (C) into the reinforcing fiber bundle were present.

(Unidirectional laminated material)

Furthermore, a unidirectional laminated material was fabricated in the same manner as in Example 6 using this unidirectional material sheet, and the interlaminar shear stress (ILSS) was measured. Its ILSS was 19.5 MPa.

The evaluation results in Example 6 and Comparative Examples 4 to 5 are shown in Table 2.

Table 2

| | | Ex. 6 | Comp. Ex. 4 | Comp. Ex. 5 |
|---|---|---|---|---|
| Reinforcing Fiber Bundle | | Reinforcing Fiber Bundle of Ex. 5 | Reinforcing Fiber Bundle of Comp. Ex. 2 | Reinforcing Fiber Bundle of Comp. Ex. 3 |
| Matrix Resin (C) | | PP containing 10 wt% of QE800 | | |
| Unidirectional Material | SEM Photograph | Fig. 1 | Fig. 3 (Peeled Portions are observed) | Fig. 4 (Unimpregnated Portions are observed) |
| Unidirectional Laminated Material | Elastic Modulus (GPa) | 96.6 | - | - |
| | Rupture Strength (MPa) | 935 | - | - |
| | Interlaminar Shear Stress (MPa) | 28.9 | 17.3 | 19.5 |
| Random Stampable Sheet | SEM Photograph | Fig. 2 | - | - |
| | Elastic Modulus (GPa) | 22.6 | - | - |
| | Rupture Strength (MPa) | 138 | - | - |

[Example 7]

(Preparation of emulsion)

10 parts by mass of the maleic anhydride modified polyethylene obtained in Production Example 2 and 100 parts by mass of an ethylene/propylene random copolymer (TAFMER P manufactured by Mitsui Chemicals Inc.) and 1.5 parts by mass of potassium oleate as the surfactant (D) were mixed, and an emulsion containing the component (A) and the component (B) was obtained in the same manner as in Example 1. The resultant emulsion (water dispersion) had a solid content of 45% by mass and an acid value of 5.0 mg KOH in terms of the solid content of 1 g.

Then, 2.3 parts by mass of this emulsion, 10 parts by mass of ammonia water (ammonia concentration: 28% by mass) and 88 parts by mass of distilled water were mixed to obtain an emulsion containing the components (A) and (B). In this emulsion, the concentration of the modified polyethylene containing a potassium carboxylate derived from the maleic anhydride modified polyethylene was 0.09% by mass, the concentration of EPR was 0.91% by mass, and the concentration of ammonia ($NH_3$) was 2.8% by mass.

(Treatment of carbon fiber bundle)

This emulsion was allowed to adhere to a carbon fiber bundle composed of a commercially available carbon fiber (manufactured by Formosa Plastics Corporation, trade name: TC-35 (12K)) using a roller impregnation method. Then, the emulsion was dried at 130°C for 2 minutes online to remove low-boiling components, to obtain the reinforcing fiber bundle of the present invention. Then, this reinforcing fiber bundle and a mixture of a commercially available unmodified polyethylene (manufactured by Prime Polymer Co., Ltd., trade name: Prime Polypro 1300J) and a modified polyethylene in which 2.0% by mass of maleic anhydride is grafted (the melt flow rate measured at 190°C according to ASTM D1238 was 1.8 g/10 minutes) (mass ratio: 98.75/1.25) as the matrix resin (C) were used, to fabricate the carbon fiber reinforced thermoplastic resin molded body of the present invention. The evaluation results are shown in Table 3.

[Comparative Example 6]

In the same manner as in Example 7 excepting that the blending composition was changed so that the concentration of ammonia ($NH_3$) in the emulsion was zero, an emulsion was prepared, a reinforcing fiber bundle was fabricated and a carbon fiber reinforced thermoplastic resin molded body was fabricated. The evaluation results are shown in Table 3.

Table 3

<table>
<tr><th colspan="3"></th><th>Ex. 7</th><th>Comp. Ex. 6</th></tr>
<tr><td colspan="3">Carbon Fiber</td><td>TC-35</td><td>TC-35</td></tr>
<tr><td rowspan="4">Composition of Emulsion (wt%)</td><td rowspan="2">Component (A)</td><td>Potassium Carboxylate-containing Modified PP (A1)</td><td>0.09</td><td>0.09</td></tr>
<tr><td>Ethylene/Propylene Copolymer (A2)</td><td>0.91</td><td>0.91</td></tr>
<tr><td rowspan="2">Component (B)</td><td>$NH_3$</td><td>2.8</td><td>0</td></tr>
<tr><td>Amount of $NH_3$ per 1 mole of Carboxylate Group (moles)</td><td>1647</td><td>0</td></tr>
<tr><td colspan="3">Amount of Component (A) adhered to Reinforcing Fiber Bundle (wt%)</td><td>0.7</td><td>0.8</td></tr>
<tr><td>Interface Shear Strength (MPa)</td><td>Component (C)</td><td>PE containing 1.3 wt% of Maleic Anhydride Modified Polyethylene</td><td>16.5</td><td>14.2</td></tr>
</table>

[Example 8]

Four carbon fiber bundles (trade name: TC35R-12K) manufactured by Formosa Plastics Corporation were continuously immersed at a linear speed of 7 m/minute, so that the fiber bundles did not come into mutual contact, into a sizing liquid (emulsion) prepared in a sizing bath shown in Fig. 9 so that the concentration of the potassium carboxylate-containing modified polypropylene/propylene/1-butene•ethylene copolymer (mass ratio: 1/9) used in Example 1 and the concentration of ammonia were respectively 1.5% by mass and 1.0% by mass (immersion time: 5 seconds),and allowed

to pass through a nip roll (linear pressure: 205 N/m) composed of a rubber roller 1 and a steal roller 2, and then, dried at 130°C for 2 minutes, to continuously obtain a dried carbon fiber bundle. This continuous immersion-drying apparatus has a mechanism by which the sizing agent decreasing by immersion is fed into an immersion tank 5 continuously by a feeding pump 7 disposed in a sizing agent reserve tank which is prepared separately.

This continuous immersion experiment was carried out at most 48 hours after initiation of feeding of the carbon fiber bundle. At every predetermined time, arbitrary nine parts of the four dried carbon fiber bundles were selected, and the adhesion amount of the component (A), its variation coefficient, and a SEM photograph of the surface of the fiber bundle were measured. The adhesion amount of the component (A) was measured as described above. The SEM photograph was measured (magnification: 1000 fold) under the condition of an acceleration voltage of 20 kV using JEOL JSM-5600 (manufactured by JEOL). As the measurement sample, one vapor-deposited with gold by vacuum sputtering before SEM measurement was used.

Three hours after feeding the carbon fiber bundle to the immersion tank, the variation coefficient of the adhesion amount of the component (A) increased. According to the SEM photograph (Fig. 5) after 5 hours, plenty of protuberant foreign matters were observed on the surface of the carbon fiber. The separately measured surface tension of the sizing liquid used in Example 8 was 44.2 mN/m (Surface tension measuring instrument K100 manufactured by KRUSS was used. It was measured by a ring method.).

[Example 9]

The continuous immersion experiment was conducted in the same manner as in Example 8, excepting that the ammonia concentration was changed to a value shown in Table 4. Until 12 hours after feeding of the carbon fiber bundle to the immersion tank, the adhesion amount of the component (A) and its variation coefficient transitioned stably, however, after 18 hours, the variation coefficient doubled. According to the SEM photograph (Fig. 6) after 18 hours, it was found that protuberant foreign matters were slightly observed on the surface of the carbon fiber. The separately measured surface tension of the sizing liquid used in Example 9 was 43.4 mN/m (Surface tension measuring instrument K100 manufactured by KRUSS was used. It was measured by a ring method.).

[Example 10]

The continuous immersion experiment was conducted in the same manner as in Example 8, excepting that the ammonia concentration was changed to a value shown in Table. 4. It was confirmed that until 24 hours after feeding of the carbon fiber bundle to the immersion tank, the adhesion amount of the component (A) and its variation coefficient transitioned stably. According to the SEM photograph (Fig. 7) after 48 hours, it was found that protuberant foreign matters were not observed at all on the surface of the carbon fiber. The separately measured surface tension of the sizing liquid used in Example 10 was 43.2 mN/m (Surface tension measuring instrument K100 manufactured by KRUSS was used. It was measured by a ring method.).

[Comparative Example 7]

The continuous immersion experiment was conducted in the same manner as in Example 8, excepting that ammonia was not used. It was confirmed that one hour after feeding of the carbon fiber bundle to the immersion tank, an aggregate was formed, and the variation coefficient of the adhesion amount of the component (A) increased steeply. According to the SEM photograph (Fig. 8) after 1 hour, it was found that plenty of beard-like foreign matters were observed on the surface of the carbon fiber. The separately measured surface tension of the sizing liquid used in Comparative Example 7 was 50.0 mN/m (Surface tension measuring instrument K100 manufactured by KRUSS was used. It was measured by a ring method.).

Table 4

| | | | Ex. 8 | | | Ex. 9 | | | Ex. 10 | | | | Comp. Ex. 7 |
|---|---|---|---|---|---|---|---|---|---|---|---|---|---|
| Carbon Fiber | | | TC-35R | | | TC-35R | | | TC-35R | | | | TC-35R |
| Composition of Emulsion (wt%) | Component (A1) | Potassium Carboxylate-containing Modified PP | 0.15 | | | 0.15 | | | 0.15 | | | | 0.15 |
| | Component (A2) | Propylene/Ethylene/ Butene Copolymer | 1.35 | | | 1.35 | | | 1.35 | | | | 1.35 |
| | Component (B) | $NH_3$ | 1.0 | | | 1.5 | | | 2.25 | | | | 0 |
| | | Amount of $NH_3$ per 1 mole of Carboxylate Group (moles) | 196 | | | 294 | | | 441 | | | | 0 |
| Continuous Immersion Experiment (hr) | | | 1 | 3 | 5 | 6 | 12 | 18 | 8 | 16 | 24 | 48 | 1 |
| Adhesion Amount of Component (A) (n = 9) | | Average Value (wt%) | 1.2 | 1.4 | ND | 1.1 | 1.2 | 1.4 | 1.0 | 1.1 | 1.0 | ND | 1.5 |
| | | Variation Coefficient (%) | 2.2 | 6.2 | ND | 2 | 2.3 | 5.3 | 2.7 | 2.1 | 1.9 | ND | 7.2 |
| SEM Photograph of Fiber Bbundle | | | ND | ND | Fig. 5 | ND | ND | Fig. 6 | ND | ND | ND | Fig. 7 | Fig. 8 |
| Amount of Observation of Aggregated Foreign Material note 1) | | | ND | ND | C | ND | ND | B | ND | ND | ND | A | D |

Note 1)
A: Not observed at all.
B: Slight protuberant foreign matters are observed.
C: Plenty of protuberant foreign matters are observed.
D: Plenty of beard-like foreign matters are observed.
In the table, ND denotes not detectable (no measurement).

As apparent from the results of Examples 8 to 10 and Comparative Example 7, it is understood that the sizing agent adheres stably to carbon fiber by adding ammonia to a modified polyolefin resin containing a potassium carboxylate in a known polymer chain in the sizing liquid. The reason for this is believed that when the surface tension of the sizing liquid lowers, impregnation of molecules of the sizing agent into the surface of the carbon fiber having a fine structure is made easy. An increase in the particle stability of the dispersion containing the sizing liquid owing to addition of ammonia is also believed as one reason for manifestation of the effect of the present invention.

[Example 11]

(Unidirectional material)

A unidirectional material sheet was prepared according to the following procedure by an apparatus obtained by combining an apparatus described in JP 2013-227695 with an extruder for melting a resin, using the reinforcing fiber bundle obtained in Example 10. As the matrix resin (C) in this procedure, the same resin as used in Example 5 was used. Specifically, the reinforcing fiber bundle was opened by an opening apparatus described in JP 2013-227695, and the heated reinforcing fiber bundle and the matrix resin (C) melted by the extruder were processed into a film by a T-die, the film was sandwiched between release papers, heated and pressed by a pressure roller, thereby impregnating the matrix resin (C) into the reinforcing fiber bundle, and then cooled and solidified, to obtain a unidirectional material sheet. The temperatures of the extruder and the T-die were 260°C, and the temperature of the pressure roller was 270°C.

The resultant unidirectional material sheet had a thickness of 150 μm and a fiber volume fraction Vf of 0.356. For confirming its impregnation condition, the unidirectional material sheet was observed using SEM (scanning electron microscope) (manufactured by JEOL, device name: JSM7001F, acceleration voltage: 10 kV, reflected electron image). Specifically, the unidirectional material was embedded in an epoxy resin, the surface was polished by a polishing machine to fabricate a smooth cross-sectional surface, and SEM observation was performed. Fig. 10 is its SEM photograph (500-fold), and the white portion is a filament of a reinforcing fiber bundle and the black portion is a matrix resin (C). As apparent from this SEM photograph, the matrix resin (C) was very well impregnated into the reinforcing fiber bundle and unimpregnated portions and voids were not observed.

(Unidirectional laminated material)

Furthermore, seven layers of this unidirectional material sheet were laminated in 0° direction, and this laminate was placed in a press machine (manufactured by SHINTO Metal Industries Corporation, device name: NSF-37HHC) equipped with a flat mold. Then, the laminate was compressed under pressure of 5 MPa at 230°C for 5 minutes, and then, immediately cooled while keeping the pressing condition, to obtain a unidirectional laminated material of 1.0 mm thickness.

The resultant unidirectional laminated material was cut out to fabricate four test pieces (250 mm × 15 mm), and a tensile test was conducted at a rate of 2 mm/min using a tensile tester (manufactured by Zwick, device name: Z100) to measure elastic modulus and rupture strength (according to ASTM D3039), and the measured values of the four test pieces were averaged. As a result, elastic modulus was 83.0 GPa and rupture strength was 1180 MPa. Furthermore, interlaminar shear stress (ILSS) was measured (according to ASTM D2344) using a short span bending test equipment (manufactured by Shimadzu Corp., device name; Shimadzu Autograph AG-5KNX). As a result, ILSS was 27.2 MPa.

Explanation of numerals

1: Rubber roller
2: Steel roller
3: Liquid drip recovering plate
4: Liquid drip recovering tank
5: Immersion tank containing emulsion
6: Running direction of carbon fiber
7: Emulsion feeding pump

**Claims**

1. A reinforcing fiber bundle composed of a carbon fiber bundle treated with an emulsion, wherein the emulsion contains a modified polyolefin (A1) comprising at least a metal carboxylate bonded to the polymer chain, and 196 to 5,000 moles of an amine compound (B) represented by the following general formula (1), per one mole of the carboxylate group in the modified polyolefin (A1);

$$R\text{-}NH_2 \qquad (1)$$

wherein the formula (1), R is a hydrogen atom or a hydrocarbon group having 1 to 10 carbon atoms.

2. The reinforcing fiber bundle according to claim 1, which is obtained by immersing the carbon fiber bundle into the emulsion and then drying the carbon fiber bundle.

3. The reinforcing fiber bundle according to claim 1, wherein the mass ratio of the modified polyolefin (A1) is 0.001 to 10% by mass in the emulsion.

4. The reinforcing fiber bundle according to claim 1, wherein the emulsion also contains an unmodified polyolefin (A2), in addition to the modified polyolefin (A1).

5. The reinforcing fiber bundle according to claim 1, wherein the adhesion amount of the modified polyolefin (A1) to the reinforcing fiber bundle, or the total adhesion amount of the modified polyolefin (A1) and the unmodified polyolefin (A2) to the reinforcing fiber bundle if it contains the unmodified polyolefin (A2), is 0.1 to 5.0% by mass.

6. A carbon fiber reinforced thermoplastic resin molded body wherein the reinforcing fiber bundle of claim 1 is combined with a matrix resin (C), and the volume ratio of the reinforcing fiber bundle is 10 to 70% in the molded body.

7. The carbon fiber reinforced thermoplastic resin molded body according to claim 6, wherein the matrix resin (C) is a modified polyolefin (C1) and/or an unmodified polyolefin (C2).

8. The carbon fiber reinforced thermoplastic resin molded body according to claim 7, wherein the unmodified polyolefin (C2) is at least one polyolefin selected from a polypropylene (C2-1) having a melting point Tm of 120 to 165 °C measured by differential scanning calorimetry (DSC) and a polyethylene (C2-2) having a density of 890 to 960 $kg/m^3$.

9. The carbon fiber reinforced thermoplastic resin molded body according to claim 7, wherein the amount of the modified polyolefin (C1) in the matrix resin (C) is 0 to 50% by mass.

10. The carbon fiber reinforced thermoplastic resin molded body according to claim 6, which is in the form of a unidirectional material, a unidirectional laminated material or a random stampable sheet.

11. A method for producing a reinforcing fiber bundle, which comprises,
immersing a carbon fiber bundle into an emulsion and then drying the carbon fiber bundle, wherein the emulsion contains
a modified polyolefin (A1) comprising at least a metal carboxylate bonded to the polymer chain, and
196 to 5,000 moles of an amine compound (B) represented by the following general formula (1), per one mole of the carboxylate group in the modified polyolefin (A1);

$$R\text{-}NH_2 \qquad (1)$$

wherein the formula (1), R is a hydrogen atom or a hydrocarbon group having 1 to 10 carbon atoms.

**Patentansprüche**

1. Verstärkungsfaserbündel, zusammengesetzt aus einem Kohlenstofffaserbündel, das mit einer Emulsion behandelt wurde, wobei die Emulsion Folgendes enthält:

   ein modifiziertes Polyolefin (A1), das mindestens ein Metallcarboxylat umfasst, das an die Polymerkette gebunden ist, und
196 bis 5000 Mol einer Aminverbindung (B), dargestellt durch die folgende allgemeine Formel (1), pro ein Mol der Carboxylatgruppe in dem modifizierten Polyolefin (A1);

$$R\text{-}NH_2 \qquad (1)$$

wobei in der Formel (1), R ein Wasserstoffatom oder eine Kohlenwasserstoffgruppe mit 1 bis 10 Kohlenstoffatomen ist.

2. Verstärkungsfaserbündel nach Anspruch 1, das durch Eintauchen des Kohlenstofffaserbündels in die Emulsion und anschließendes Trocknen des Kohlenstofffaserbündels erhalten wird.

3. Verstärkungsfaserbündel nach Anspruch 1, wobei das Massenverhältnis des modifizierten Polyolefins (A1) 0,001 bis 10 Masse-% in der Emulsion beträgt.

4. Verstärkungsfaserbündel nach Anspruch 1, wobei die Emulsion außerdem zusätzlich zu dem modifizierten Polyolefin (A1) ein unmodifiziertes Polyolefin (A2) enthält.

5. Verstärkungsfaserbündel nach Anspruch 1, wobei die Adhäsionsmenge des modifizierten Polyolefins (A1) an dem Verstärkungsfaserbündel oder die Gesamtadhäsionsmenge des modifizierten Polyolefins (A1) und des unmodifizierten Polyolefins (A2) an dem Verstärkungsfaserbündel, wenn es das unmodifizierte Polyolefin (A2) enthält, 0,1 bis 5,0 Masse-% beträgt.

6. Formkörper aus kohlenstofffaserverstärktem thermoplastischen Harz, wobei das verstärkende Faserbündel nach Anspruch 1 mit einem Matrixharz (C) kombiniert ist und das Volumenverhältnis des verstärkenden Faserbündels 10 bis 70 % im Formkörper beträgt.

7. Formkörper aus kohlenstofffaserverstärktem thermoplastischen Harz nach Anspruch 6, wobei das Matrixharz (C) ein modifiziertes Polyolefin (C1) und/oder ein unmodifiziertes Polyolefin (C2) ist.

8. Formkörper aus kohlenstofffaserverstärktem thermoplastischen Harz nach Anspruch 7, wobei das unmodifizierte Polyolefin (C2) mindestens ein Polyolefin ist, das ausgewählt ist aus einem Polypropylen (C2-1) mit einem Schmelzpunkt Tm von 120 bis 165 °C, gemessen durch Differentialscanningkalorimetrie (DSC), und einem Polyethylen (C2-2) mit einer Dichte von 890 bis 960 $kg/m^3$.

9. Formkörper aus kohlenstofffaserverstärktem thermoplastischen Harz nach Anspruch 7, wobei die Menge des modifizierten Polyolefins (C1) in dem Matrixharz (C) 0 bis 50 Masse-% beträgt.

10. Formkörper aus kohlenstofffaserverstärktem thermoplastischen Harz nach Anspruch 6, der in Form eines unidirektionalen Materials, eines unidirektionalen laminierten Materials oder einer beliebige pressbaren Schicht vorliegt.

11. Verfahren zur Herstellung eines Verstärkungsfaserbündels, umfassend:
Eintauchen eines Kohlenstofffaserbündels in eine Emulsion und anschließendes Trocknen des Kohlenstofffaserbündels, wobei die Emulsion Folgendes enthält:

ein modifiziertes Polyolefin (A1), umfassend mindestens ein Metallcarboxylat, das an die Polymerkette gebunden ist, und
196 bis 5.000 Mol einer Aminverbindung (B), dargestellt durch die folgende allgemeine Formel (1), pro ein Mol der Carboxylatgruppe in dem modifizierten Polyolefin (A1);

$$R\text{-}NH_2 \qquad (1)$$

wobei in der Formel (1), R ein Wasserstoffatom oder eine Kohlenwasserstoffgruppe mit 1 bis 10 Kohlenstoffatomen ist.

## Revendications

1. Faisceau de fibres de renfort composé d'un faisceau de fibres de carbone traité par une émulsion, ladite émulsion contenant :

une polyoléfine modifiée (A1) comprenant au moins un carboxylate de métal lié à la chaîne polymère, et
196 à 5000 moles d'un composé amine (B), représenté par la formule générale (1) suivante, par mole de groupe carboxylate de la polyoléfine modifiée (A1) ;

$$R\text{-}NH_2 \qquad (1)$$

dans laquelle formule (1) R est un atome d'hydrogène ou un groupe hydrocarboné comptant 1 à 10 atomes de carbone.

2. Faisceau de fibres de renfort selon la revendication 1, obtenu par immersion du faisceau de fibres de carbone dans l'émulsion puis séchage du faisceau de fibres de carbone.

3. Faisceau de fibres de renfort selon la revendication 1, dans lequel le rapport massique de la polyoléfine modifiée (A1) va de 0,001 à 10 % en masse dans l'émulsion.

4. Faisceau de fibres de renfort selon la revendication 1, dans lequel l'émulsion contient également une polyoléfine non modifiée (A2) en sus de la polyoléfine modifiée (A1).

5. Faisceau de fibres de renfort selon la revendication 1, dans lequel la quantité d'adhésion de la polyoléfine modifiée (A1) au faisceau de fibres de renfort, ou la quantité d'adhésion totale de la polyoléfine modifiée (A1) et de la polyoléfine non modifiée (A2) au faisceau de fibres de renfort, s'il contient ladite polyoléfine non modifiée (A2), va de 0,1 à 5,0 % en masse.

6. Corps moulé en résine thermoplastique renforcée de fibres de carbone, dans lequel le faisceau de fibres de renfort selon la revendication 1 est combiné à une résine matricielle (C), et le rapport volumique du faisceau de fibres de renfort va de 10 à 70 % dans le corps moulé.

7. Corps moulé en résine thermoplastique renforcée de fibres de carbone selon la revendication 6, dans lequel la résine matricielle (C) est une polyoléfine modifiée (C1) et/ou une polyoléfine non modifiée (C2).

8. Corps moulé en résine thermoplastique renforcée de fibres de carbone selon la revendication 7, dans lequel la polyoléfine non modifiée (C2) est au moins une polyoléfine choisie parmi un polypropylène (C2-1) d'un point de fusion Tm allant de 120 à 165 °C, mesuré par analyse calorimétrique différentielle (ACD), et une polyéthylène (C2-2) d'une densité allant de 890 à 960 kg/$m^3$.

9. Corps moulé en résine thermoplastique renforcée de fibres de carbone selon la revendication 7, dans lequel la quantité de polyoléfine modifiée (C1) dans la résine matricielle (C) va de 0 à 50 % en masse.

10. Corps moulé en résine thermoplastique renforcée de fibres de carbone selon la revendication 6, se trouvant sous la forme d'un matériau unidirectionnel, d'un matériau stratifié unidirectionnel ou d'une feuille à orientation aléatoire estampable.

11. Procédé de production d'un faisceau de fibres de renfort, comprenant :
l'immersion d'un faisceau de fibres de carbone dans une émulsion puis le séchage du faisceau de fibres de carbone, ladite émulsion contenant :
une polyoléfine modifiée (A1) comprenant au moins un carboxylate de métal lié à la chaîne polymère, et
196 à 5000 moles d'un composé amine (B), représenté par la formule générale (1) suivante, par mole de groupe carboxylate de la polyoléfine modifiée (A1) ;

$$R\text{-}NH_2 \qquad (1)$$

dans laquelle formule (1) R est un atome d'hydrogène ou un groupe hydrocarboné comptant 1 à 10 atomes de carbone.

Fig. 1

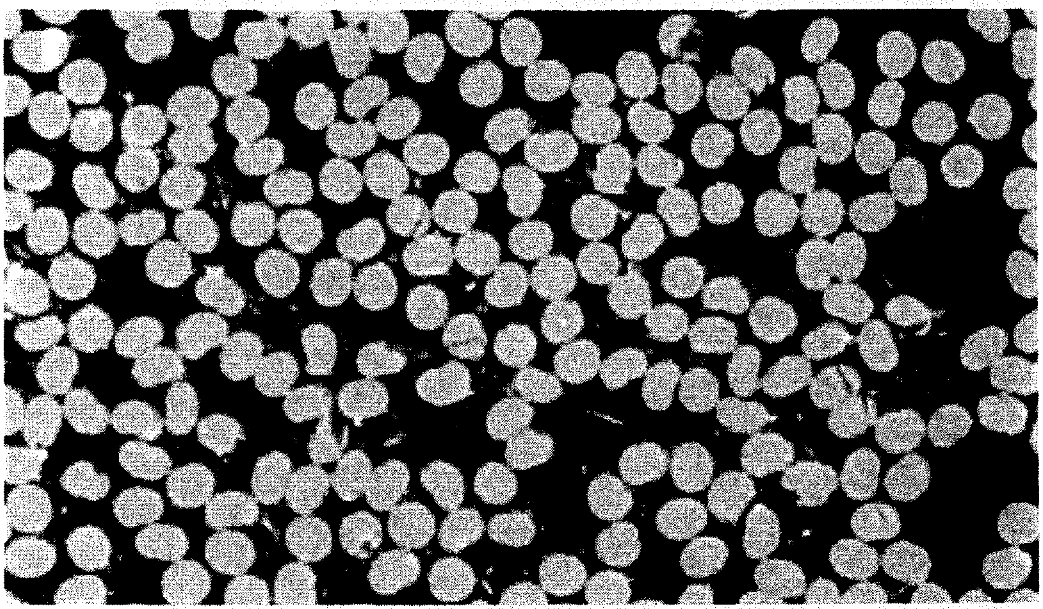

Fig. 2

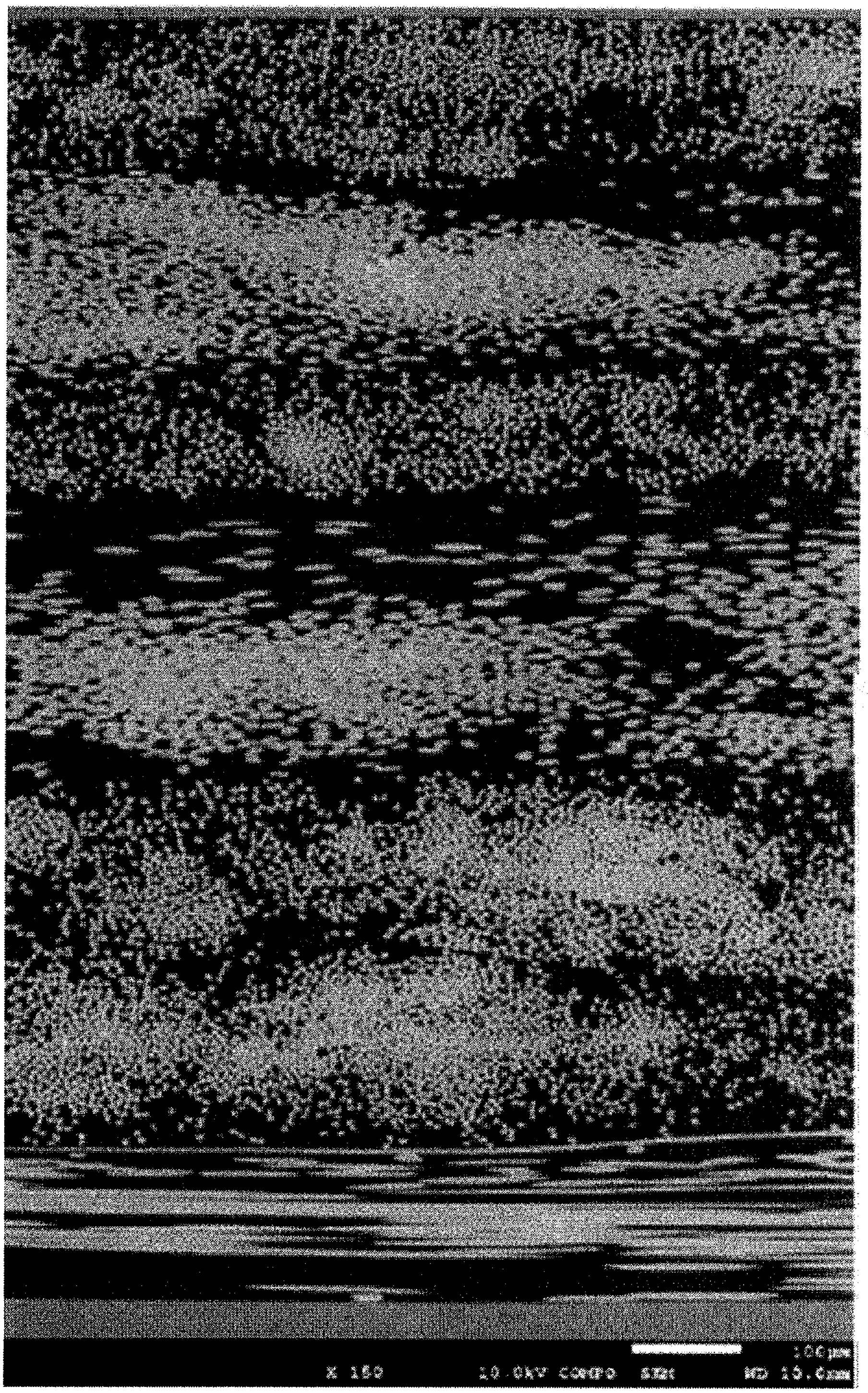

Fig. 3

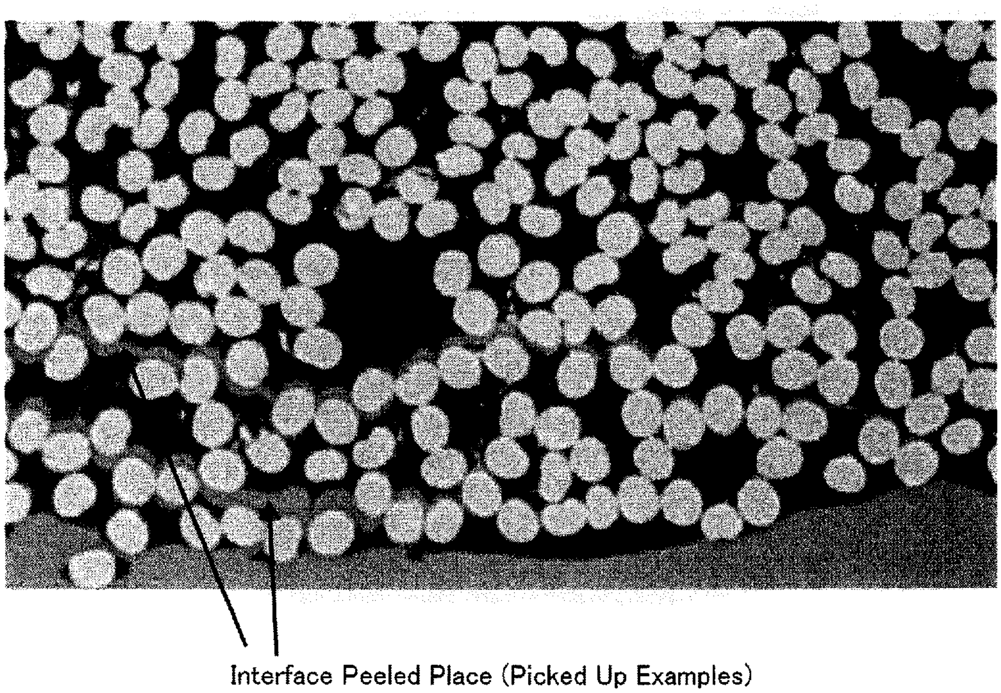
Interface Peeled Place (Picked Up Examples)

Fig. 4

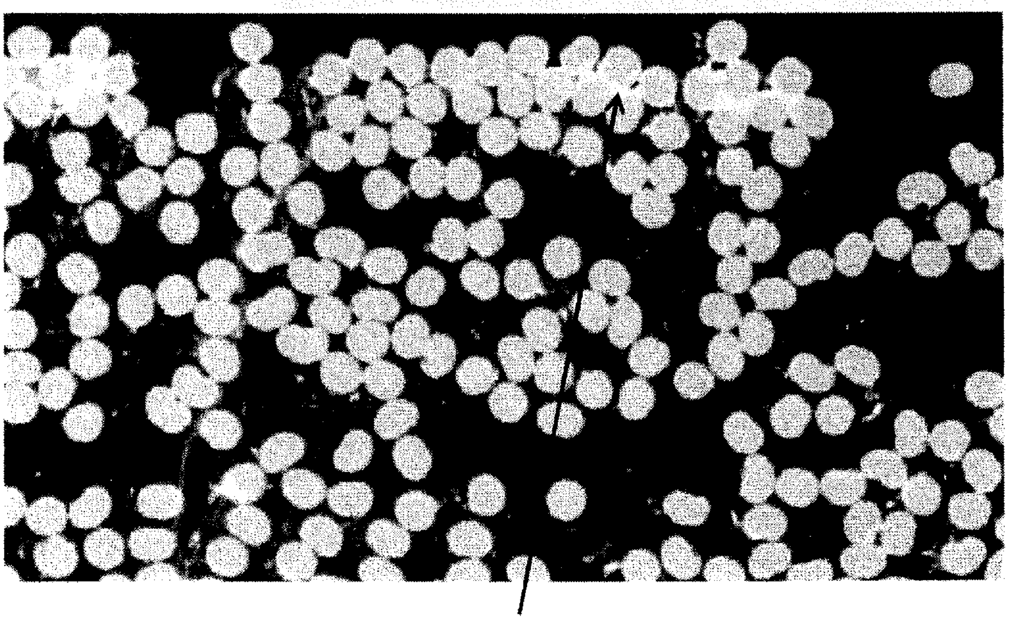
Unimpregnated Portions (Picked Up Example)

Fig. 5

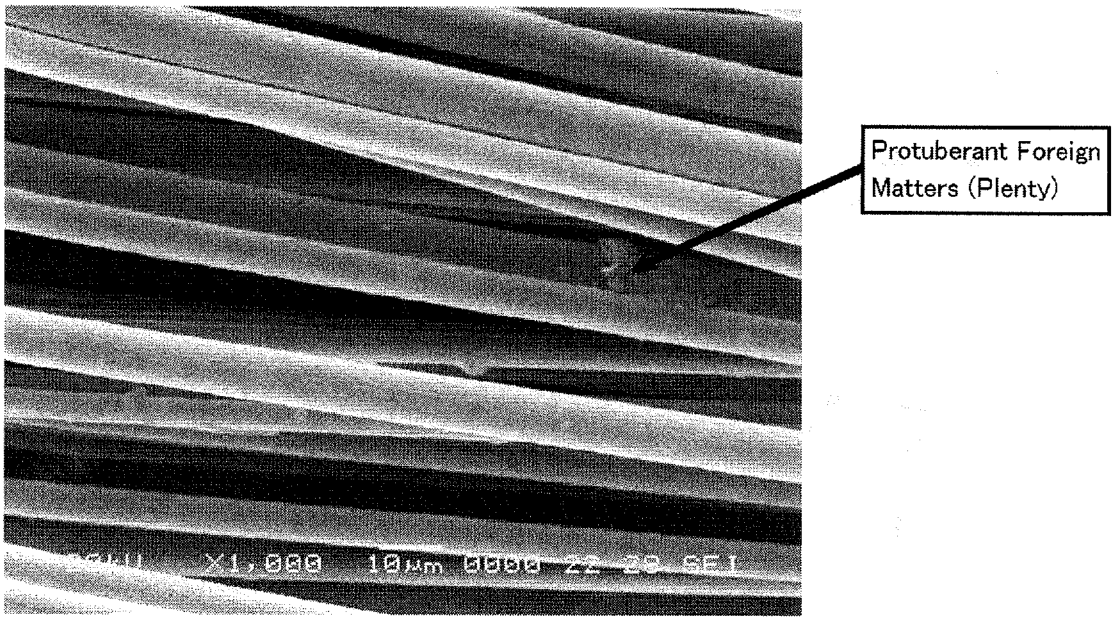
Protuberant Foreign Matters (Plenty)
X1,000 10µm

Fig. 6

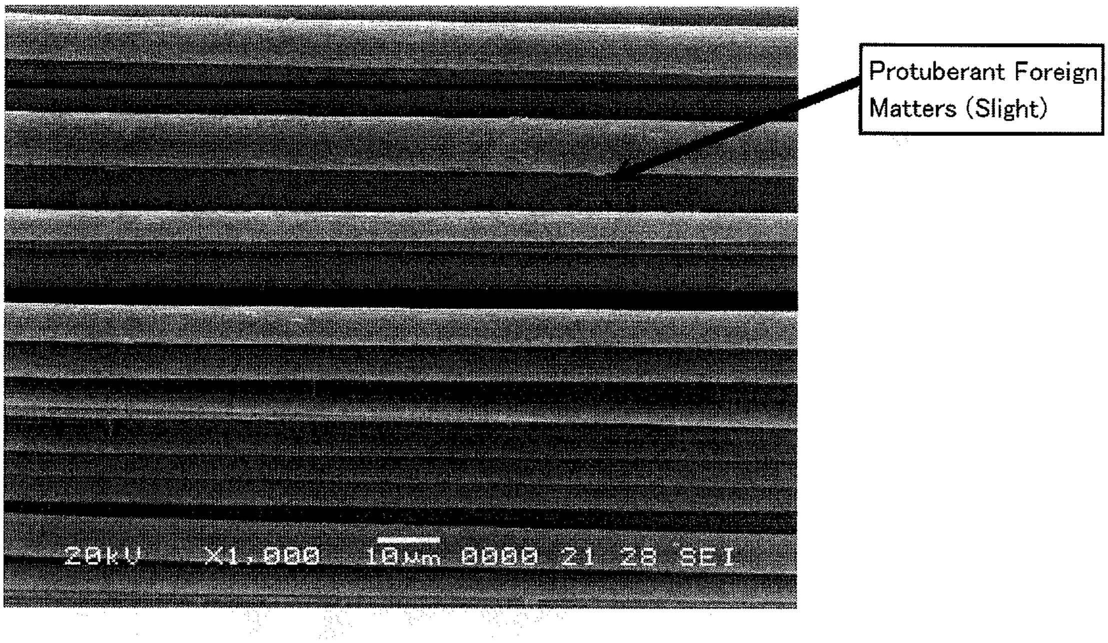
Protuberant Foreign Matters (Slight)
20kV X1,000 10µm 0000 21 28 SEI

Fig. 7

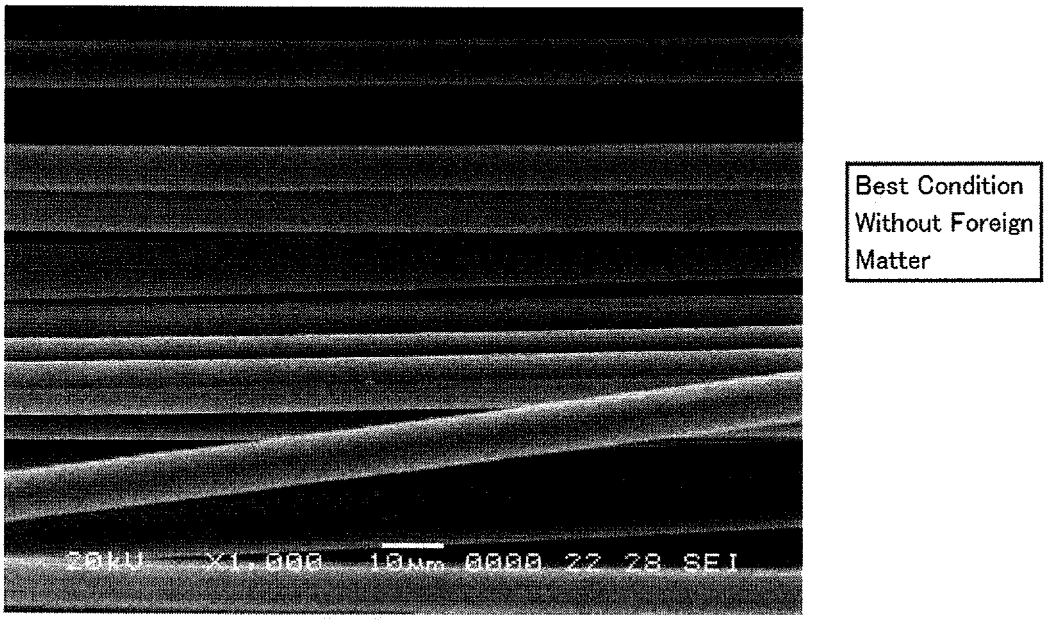
20kU X1,000 10µm 0000 22 28 SEI
Best Condition
Without Foreign
Matter

Fig. 8

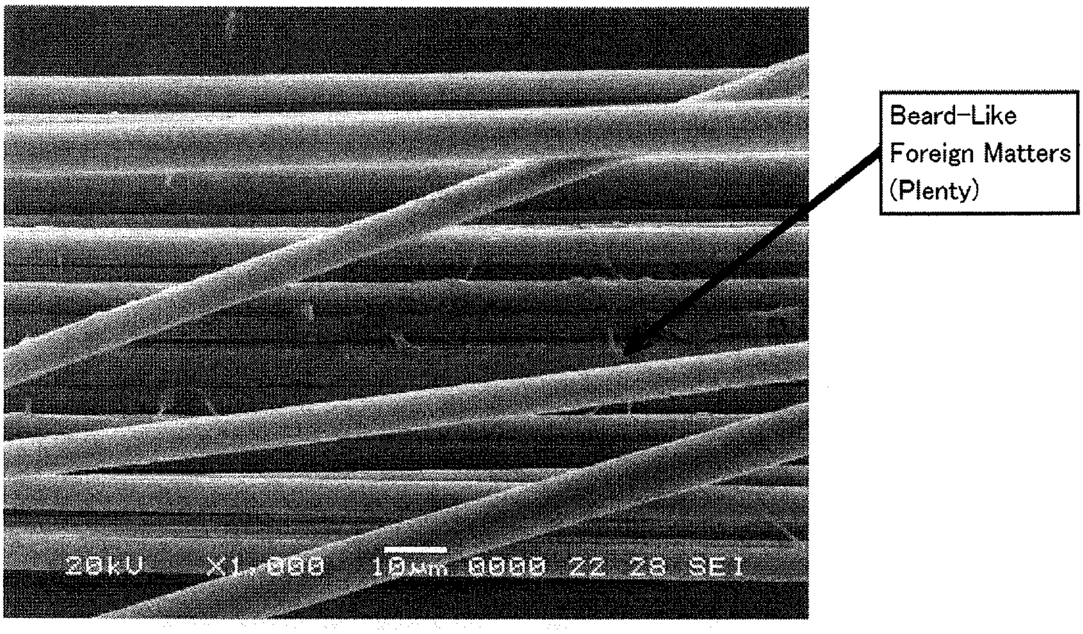
20kU X1,000 10µm 0000 22 28 SEI
Beard-Like
Foreign Matters
(Plenty)

Fig. 9

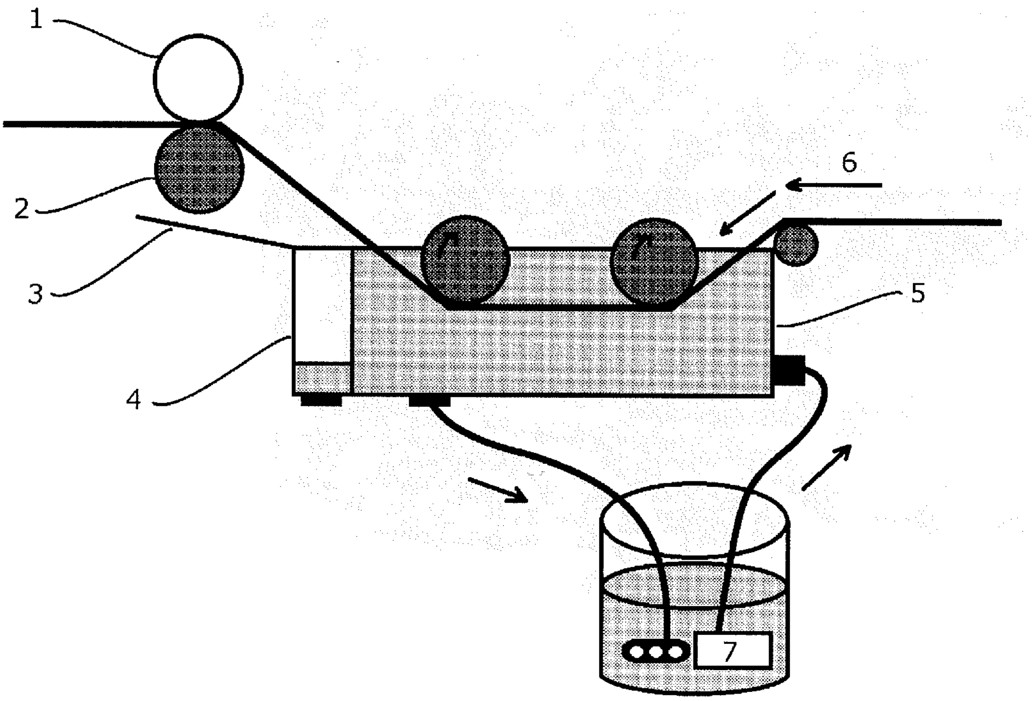


Fig. 10

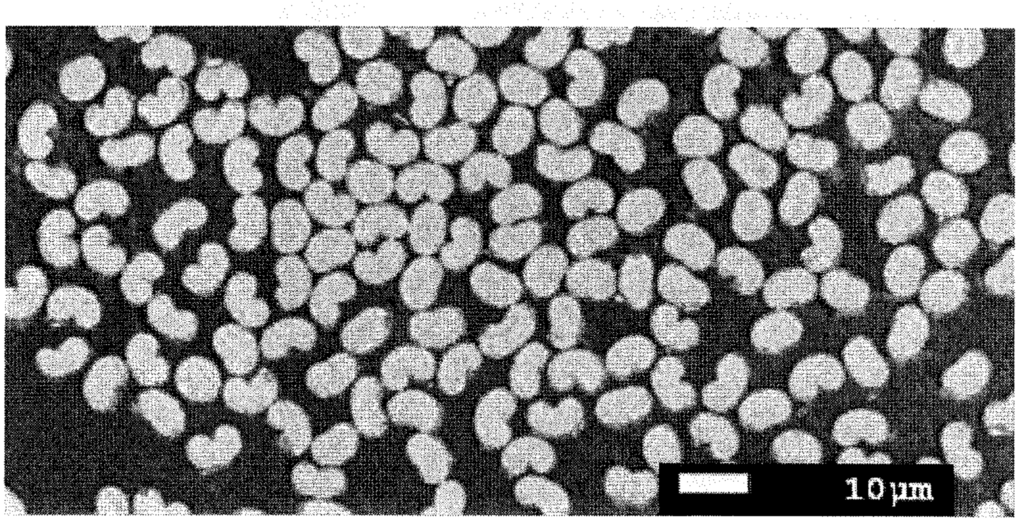

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6107442 A
- WO 2006101269 A
- JP 2013177705 A
- JP 2012184377 A
- EP 2371897 A1
- WO 2010074118 A
- JP 2006233346 A
- WO 2006098452 A
- JP H10131048 B
- JP 2013227695 A


### Non-patent literature cited in the description


- **OHSAWA.** *Journal of Society of Fiber Science and Technology,* 1977, vol. 33 (1